(19) Europäisches Patentamt
European Patent Office
Office européen des brevets

(11) EP 4 468 386 A1

(12) EUROPEAN PATENT APPLICATION
published in accordance with Art. 153(4) EPC

(43) Date of publication:
**27.11.2024 Bulletin 2024/48**

(21) Application number: **22921144.6**

(22) Date of filing: **21.01.2022**

(51) International Patent Classification (IPC):
***H01M 4/13*** *(2010.01)* ***H01M 4/525*** *(2010.01)*
***H01M 10/0567*** *(2010.01)* ***H01M 10/0569*** *(2010.01)*

(52) Cooperative Patent Classification (CPC):
**H01M 4/13; H01M 4/525; H01M 10/0567; H01M 10/0569;** Y02E 60/10

(86) International application number:
**PCT/CN2022/073179**

(87) International publication number:
**WO 2023/137701 (27.07.2023 Gazette 2023/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **XU, Yanyan**
**Ningde City, Fujian 352100 (CN)**

(74) Representative: **Klunker IP**
**Patentanwälte PartG mbB**
**Destouchesstraße 68**
**80796 München (DE)**

# (54) ELECTROCHEMICAL DEVICE, AND ELECTRONIC DEVICE COMPRISING SAME

(57) This application relates to an electrochemical device and an electronic device containing same. The electrochemical device includes a positive electrode, a negative electrode, and an electrolyte solution. The electrolyte solution includes a fluorine-substituted linear carboxylate ester. Based on a total mass of the electrolyte solution, a mass percent of the fluorine-substituted linear carboxylate ester is a%, satisfying: $10 \leq a \leq 70$. The positive electrode includes a positive current collector and a positive active material layer applied onto at least one surface of the positive current collector. The positive active material layer includes a nickel-containing positive active material. Based on a total mass of the positive active material layer, a mass percent of nickel is x%, satisfying: $33 \leq x \leq 55$. A coating weight of the positive active material applied on the positive current collector is w ($mg/cm^2$), satisfying: $6.5 \leq w \leq 19.5$, and $1.0 \leq a/w \leq 8.2$. On the premise of ensuring a high energy density, the above configuration improves the high-temperature cycle performance, suppresses swelling, and reduces the impedance of the electrochemical device.

EP 4 468 386 A1

## Description

## TECHNICAL FIELD

This application relates to the technical field of energy storage, and in particular, to an electrochemical device and an electronic device containing same.

## BACKGROUND

Rechargeable lithium-ion batteries (LIBs) are considered to be one of the most attractive energy storage systems by virtue of a high energy density, a relatively simple reaction mechanism, a high operating voltage, a long lifespan, and environment-friendliness. Nowadays, lithium-ion batteries have been widely used in various fields, ranging from small electronic products (such as cameras, mobile phones, and other 3C consumer electronics) to large fixed energy storage systems and transportation tools (such as hybrid electric vehicle (HEV), plug-in hybrid electric vehicles (PHEV), and battery electric vehicle (BEV)).

With the continuous widening of the application fields of the lithium-ion batteries, an increasingly higher energy density of the batteries is required in the market. On the premise of ensuring a high energy density, people are also concerned about the battery lifespan, high-temperature cycle stability and safety, and impedance performance of the lithium-ion batteries. However, existing technologies currently are unable to provide an electrochemical device endowed with a high energy density, superior high-temperature cycle stability and safety, and a low resistance concurrently. In view of this situation, it is increasingly urgent to provide an electrochemical device that achieves a high level of such electrochemical performance metrics concurrently to meet people's needs.

## SUMMARY

To solve at least the above problems, this application adjusts constituents of an electrolyte solution, constituents of a positive active material, and coordination between the electrolyte solution and a positive electrode, so as to improve the high-temperature cycle performance, suppress swelling, and reduce the impedance of the electrochemical device on the premise of ensuring a high energy density.

According to an aspect of this application, this application provides an electrochemical device. The electrochemical device includes a positive electrode, a negative electrode, and an electrolyte solution. The electrolyte solution includes a fluorine-substituted linear carboxylate ester. Based on a total mass of the electrolyte solution, a mass percent of the fluorine-substituted linear carboxylate ester is a%, satisfying: $10 \leq a \leq 70$. The positive electrode includes a positive current collector and a positive active material layer applied onto at least one surface of the positive current collector. The positive active material layer includes a nickel-containing positive active material. Based on a total mass of the positive active material layer, a mass percent of nickel is x%, satisfying: $33 \leq x \leq 55$. A coating weight of the positive active material applied on the positive current collector is w ($mg/cm^2$), satisfying: $6.5 \leq w \leq 19.5$, and $1.0 \leq a/w \leq 8.2$.

According to an embodiment of this application, the fluorine-substituted linear carboxylate ester includes at least one of compounds represented by the following Formula I:

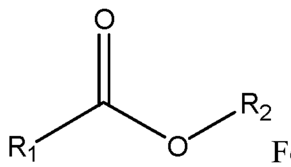
Formula I.

In Formula I, $R_1$ and $R_2$ each independently are an unsubstituted or fluorine-substituted $C_1$ to $C_3$ alkyl, and at least one of $R_1$ or $R_2$ is a fluorine-substituted $C_1$ to $C_3$ alkyl.

According to an embodiment of this application, the fluorine-substituted linear carboxylate ester includes at least one of compounds represented by the following formulas:

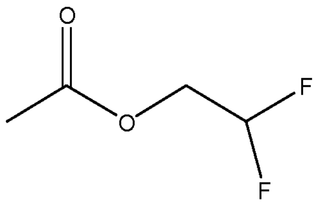 Formula I-1, 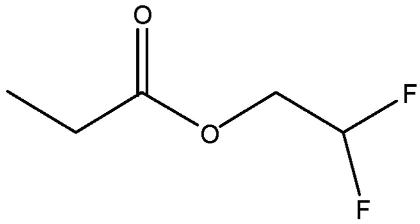 Formula I-2,

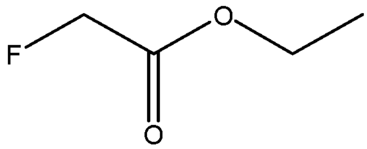 Formula I-3, 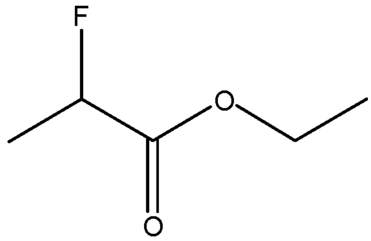 Formula I-4,

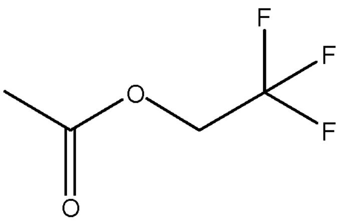 Formula I-5, or 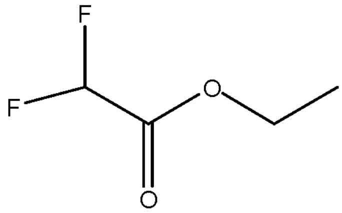 Formula I-6.

According to an embodiment of this application, the electrolyte solution includes a compound of Formula I-1 and a compound of Formula 1-2. Based on the total mass of the electrolyte solution, a mass percent of the compound of Formula I-1 is $a_1$%, and a mass percent of the compound of Formula I-2 is $a_2$%, satisfying: $10 \le a_1 + a_2 \le 70$.

According to an embodiment of this application, the electrolyte solution further includes lithium bis(fluorosulfonyl) imide (LiFSI) as a lithium salt.

According to an embodiment of this application, a concentration of the LiFSI is c mol/L, satisfying: $0.3 \le c \le 1.2$.

According to an embodiment of this application, a concentration of the LiFSI denoted as c mol/L and a coating weight of the positive active material denoted as w mg/cm$^2$ satisfy: $0.04 \le c/w \le 0.18$.

According to an embodiment of this application, the electrolyte solution further includes a non-fluorinated cyclic carbonate ester. The non-fluorinated cyclic carbonate ester includes at least one of ethylene carbonate (EC) or propylene carbonate (PC).

According to an embodiment of this application, based on the total mass of the electrolyte solution, a mass percent of the EC is $b_1$%, and a mass percent of the PC is $b_2$%, satisfying: $5 \le b_1 + b_2 \le 40$, and $0.2 \le b_1/b_2 \le 5$.

According to an embodiment of this application, a mass percent $b_1$% of the EC and a mass percent x% of nickel satisfy $0.1 \le b_1/x \le 1.0$.

According to an embodiment of this application, a mass percent of the PC denoted as $b_2$% and a coating weight of the positive active material denoted as w mg/cm$^2$ satisfy: $0.3 \le b_2/w \le 5.4$.

According to an embodiment of this application, the electrolyte solution further includes at least one of an unsaturated cyclic carbonate ester, a fluorinated carbonate ester, a cyclic sultone, a cyclic sulfate lactone, or a nitrile compound. Based on the total mass of the electrolyte solution, a mass percent of the unsaturated cyclic carbonate ester is 0.1% to 5%, a mass percent of the fluorinated carbonate ester is 0.1% to 5%, a mass percent of the cyclic sultone is 0.1% to 5%, a mass percent of the cyclic sulfate lactone is 0.1%~5%, and a mass percent of the nitrile compound is 0.1% to 5%.

According to an embodiment of this application, the unsaturated cyclic carbonate ester includes at least one of vinylene carbonate (VC) or vinyl ethylene carbonate (VEC), and the fluorinated carbonate ester includes fluoroethylene carbonate (FEC). The cyclic sultone includes at least one of 1,3-propane sultone (PS), 1,4-butane sultone (BS), or 1,3-propene sultone (PST). The cyclic sulfate lactone includes at least one of ethylene sulfate (DTD), propylene sulfate, or 4-methylethylene sulfate. The nitrile compound includes at least one of succinonitrile (SN), glutaronitrile, adiponitrile (ADN), 2-methyleneglutaronitrile, dipropylmalononitrile, 1,3,6-hexanetricarbonitrile (HTCN), 1,2,6-hexanetricarbonitrile, 1,3,5-pentanetricarbonitrile, or 1,2-bis(cyanoethoxy)ethane (EDPN).

According to an embodiment of this application, the electrochemical device further satisfies at least one of the following conditions: (1) $40 \le a_1 + a_2 \le 70$; (2) $0.5 \le c \le 1.2$; (3) $0.05 \le c/w \le 0.16$; (4) $10 \le b_1 + b_2 \le 40$ and $0.5 \le b_1/b_2 \le 5$; (5) $0.2 \le b_1/x \le 0.8$; or (6) $0.5 \le b_2/w \le 5.0$.

According to another aspect of this application, this application further provides an electronic device. The electronic device includes the electrochemical device disclosed in the above embodiment of this application.

## DETAILED DESCRIPTION OF EMBODIMENTS

Some embodiments of this application will be described in detail below. No embodiment of this application is to be construed as a limitation on this application.

The terms "include", "comprise" and "contain" used herein are open and mean including but without limitation.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In the description of specific embodiments and claims, a list of items referred to by using the terms such as "one or more of", "one or more thereof", "at least one of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrase "at least one of A, B, or C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

To increase the energy density of an electrochemical device to meet people's needs, this application uses a nickel-containing material as a positive active material of the electrochemical device. Compared with the cobalt in the typically used lithium cobalt oxide in the prior art, the nickel can provide a higher energy density. Therefore, with the increase of the content of nickel in the positive active material, the energy density of the resulting electrochemical device also increases. However, the high content of nickel also brings adverse effects. For example, in practical applications, particles of the nickel-containing material are prone to break during high-voltage charge-discharge cycles, and are prone to be oxidized by an electrolyte solution to aggravate gas production, thereby making it difficult to maintain the cycle stability and safety of the electrochemical device. Especially, under high-temperature conditions, such side reactions are intensified, and the capacity of the electrochemical device fades rapidly, and gas is produced drastically.

In addition, as an important component of the electrochemical device, the electrolyte solution is configured to transfer lithium ions or sodium ions between a positive electrode and a negative electrode to implement continuous intercalation and deintercalation of the lithium ions or sodium ions in the positive and negative electrode materials, thereby playing the role in charging and discharging. Therefore, the electrolyte solution is crucial for the electrochemical device to achieve excellent electrochemical performance (for example, a high energy density, high C-rate performance, high cycle stability, and high safety performance). The electrolyte solution typically includes an organic solvent, a lithium salt, and an additive. In the prior art, specific electrochemical performance metric (for example, cycle stability) is improved usually by adjusting the type and content of the additive. In addition, in the prior art currently, a variety of additives are usually added into the electrolyte solution. Compared with a single type of additive, a variety of additives can form a composite interface on the surface of the positive and negative active materials, thereby providing more stable protection. However, the variety of additives added and the increase in the dosage of the additives increase the film-forming impedance, thereby deteriorating the impedance characteristics of the electrochemical device.

Based on at least the above insights into the prior art, this application adjusts constituents of an electrolyte solution, constituents of a positive active material, and coordination between the electrolyte solution and a positive electrode, so as to improve the high-temperature cycle performance, suppress swelling, and reduce the impedance of the electrochemical device on the premise of ensuring a high energy density.

According to an aspect of this application, this application provides an electrochemical device. The electrochemical device includes a positive electrode, a negative electrode, and an electrolyte solution. The electrolyte solution includes a fluorine-substituted linear carboxylate ester. Based on a total mass of the electrolyte solution, a mass percent of the fluorine-substituted linear carboxylate ester is a%, satisfying: $10 \leq a \leq 70$. The positive electrode includes a positive current collector and a positive active material layer applied onto at least one surface of the positive current collector. The positive active material layer includes a nickel-containing positive active material. Based on a total mass of the positive active material layer, a mass percent of nickel is x%, satisfying: $33 \leq x \leq 55$. A coating weight of the positive active material applied on the positive current collector is w ($mg/cm^2$), satisfying: $6.5 \leq w \leq 19.5$, and $1.0 \leq a/w \leq 8.2$.

In the presence of the combined effect of the nickel content, the coating weight of the positive active material, and the content of fluorine-substituted linear carboxylate ester in the electrolyte solution, the electrochemical device, on the premise of ensuring a high energy density, not only exhibits a high cycle capacity retention rate at high temperature, but also exhibits a low impedance and excellent high-temperature performance and kinetic performance. A main reason is that the fluorine-substituted linear carboxylate ester is well resistant to oxidation, thereby improving the chemical stability of the electrolyte solution. In addition, the fluorine-substituted linear carboxylate ester can slowly form a film on the surface of the

electrode plate, thereby reducing the impedance on the one hand, and on the other hand, forming interface protection between the positive active material and the electrolyte solution, alleviating the occurrence of side reactions. Moreover, it is further found herein that, by adjusting the ratio of the mass percent of the fluorine-substituted linear carboxylate ester to the coating weight of the positive active material to fall within the range of $1.0 \leq a/w \leq 8.2$, this application can further optimize the high-temperature cycle performance and kinetic performance of the electrochemical device, and further suppress gas production.

In some embodiments, the fluorine-substituted linear carboxylate ester includes at least one of, or is at least one selected from, the compounds represented by the following Formula I:

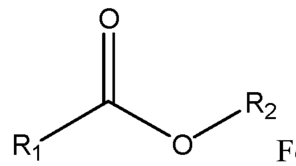
Formula I.

In Formula I, $R_1$ and $R_2$ each independently are an unsubstituted or fluorine-substituted $C_1$ to $C_5$ alkyl, and at least one of $R_1$ or $R_2$ is a fluorine-substituted $C_1$ to $C_5$ alkyl. In some embodiments, $R_1$ and $R_2$ each independently are an unsubstituted or fluorine-substituted $C_1$ to $C_3$ alkyl, and at least one of $R_1$ or $R_2$ is a fluorine-substituted $C_1$ to $C_3$ alkyl.

In some embodiments, the fluorine-substituted linear carboxylate ester includes at least one of, or is at least one selected from, the compounds represented by the following formulas:

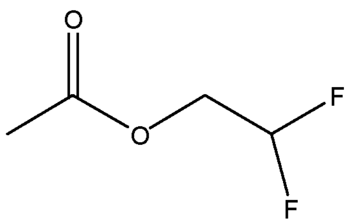
Formula I-1,

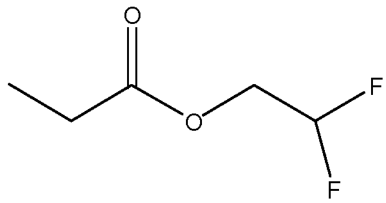
Formula I-2,

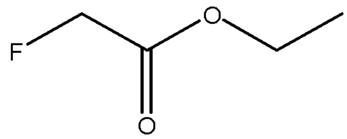
Formula I-3,

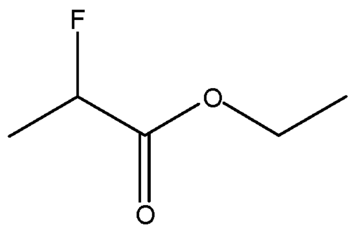
Formula I-4,

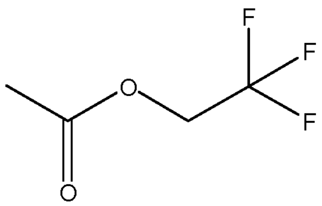
Formula I-5, or

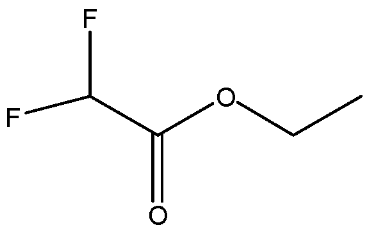
Formula I-6.

It is further found herein that the electrochemical performance of the resulting electrochemical device varies slightly depending on the structure of the fluorine-substituted linear carboxylate ester. For example, it is found herein that on the premise that other variables are constant (for example, the same nickel-containing positive active material is used, the coating weight is the same, and other constituents in the electrolyte solution remain the same), more excellent high-temperature performance and impedance characteristics can be achieved by using the compound represented by Formula I-1.

In addition, in some embodiments, the electrolyte solution includes both a compound of Formula I-1 and a compound of Formula I-2. Based on the total mass of the electrolyte solution, a mass percent of the compound of Formula I-1 is $a_1$%, and a mass percent of the compound of Formula I-2 is $a_2$%, satisfying: $10 \leq a_1 + a_2 \leq 70$. In some embodiments, the sum of $a_1$ and $a_2$ may be any one of 10, 20, 30, 40, 50, 60, 70, or a value falling within a range formed by any two thereof. For example, in some embodiments, the $a_1$ and $a_2$ satisfy: $40 \leq a_1 + a_2 \leq 70$.

It is further found herein that, when the lithium bis(fluorosulfonyl)imide (LiFSI) is used to completely or partially replace the lithium hexafluorophosphate ($LiPF_6$) as a lithium salt, the kinetic performance of the nickel-containing system can be further improved. In addition, it is further found herein that, when aluminum foil is used as a positive current collector, the presence of the LiFSI in the electrolyte solution corrodes the aluminum foil to some extent. In this case, the fluorine-substituted linear carboxylate ester in the electrolyte solution passivates the surface of the aluminum foil, and forms a firm passivation layer on the surface of the aluminum foil, thereby suppressing the corrosion of the aluminum foil by the LiFSI, and in turn, improving the cycle life and high-temperature performance of the electrochemical device on the basis of achieving high kinetic performance. For example, during continuous charge-discharge cycles, the cycle stability of the electrochemical device at high temperature can be effectively improved, and the gas production and swelling can be effectively alleviated.

In some embodiments, a concentration of the LiFSI in the electrolyte solution is c mol/L, satisfying: $0.2 \le c \le 1.5$. In some embodiments, c satisfies: $0.3 \le c \le 1.2$. In some embodiments, c satisfies: $0.5 \le c \le 1.2$.

Moreover, it is further found herein that, by adjusting the ratio of the concentration of the LiFSI denoted as c mol/L to the coating weight of the positive active material denoted as mg/$cm^2$ to fall within the specified range, this application can further optimize the high-temperature performance and impedance characteristics of the electrochemical device. In some embodiments, c/w satisfies: $0.02 \le c/w \le 0.2$. In some embodiments, c/w satisfies: $0.04 \le c/w \le 0.18$. In some embodiments, c/w satisfies: $0.05 \le c/w \le 0.16$.

In some embodiments, the electrolyte solution further includes a non-fluorinated cyclic carbonate ester. The non-fluorinated cyclic carbonate ester includes at least one of, or is at least one selected from, ethylene carbonate (EC) or propylene carbonate (PC). Compared with other solvents, the propylene carbonate and the ethylene carbonate is well capable of dissociating the lithium salt, thereby greatly accelerating the dissolution of the lithium salt.

In addition, the ethylene carbonate is much more capable of dissociating the lithium salt than the propylene carbonate. However, the ethylene carbonate is solid at room temperature, thereby increasing the viscosity of the electrolyte solution. In comparison, the liquid range of propylene carbonate (the temperature range in which the propylene carbonate is in a liquid phase) is much wider. Therefore, the ethylene carbonate used in conjunction with the propylene carbonate at a specified ratio can not only increase the degree of dissociation of the lithium salt, but also widen the liquid range of the electrolyte solution, thereby improving the high-temperature performance and impedance characteristics of the electrochemical device. In some embodiments, based on the total mass of the electrolyte solution, a mass percent of the EC is $b_1$%, and a mass percent of the PC is $b_2$%, satisfying: $5 \le b_1 + b_2 \le 40$, and $0.2 \le b_1/b_2 \le 5$. In some embodiments, $b_1$ and $b_2$ satisfy: $10 \le b_1 + b_2 \le 40$, and $0.5 \le b_1/b_2 \le 5$.

It is further found herein that, by adjusting the ratio of the mass percent $b_1$% of the EC in the electrolyte solution to the mass percent x% of nickel in the positive active material layer, the EC is facilitated to form a film at the negative electrode, and side reactions are reduced, thereby improving the cycle stability and high-temperature performance of the electrochemical device, and further suppressing the gas production. In some embodiments, the $b_1/x$ ratio satisfies: $0.05 \le b_1/x \le 1.2$. In some embodiments, the $b_1/x$ ratio satisfies: $0.1 \le b_1/x \le 1.0$. In some embodiments, the $b_1/x$ ratio satisfies: $0.2 \le b_1/x \le 0.8$.

Moreover, it is further found herein that, by adjusting the ratio of the mass percent of the PC in the electrolyte solution denoted as $b_2$% to the coating weight of the positive active material denoted as w mg/$cm^2$, this application can further optimize the performance of the electrochemical device. In some embodiments, the $b_2/w$ ratio satisfies: $0.2 \le b_2/w \le 6.0$. In some embodiments, the $b_2/w$ ratio satisfies: $0.3 \le b_2/w \le 5.4$. In some embodiments, the $b_2/w$ ratio satisfies: $0.5 \le b_2/w \le 5.0$.

In some embodiments, the electrolyte solution may further include other additives. The other additives may include, but are not limited to, at least one of an unsaturated cyclic carbonate ester, a fluorinated carbonate ester, a cyclic sultone, a cyclic sulfate lactone, or a nitrile compound. Such other additives can further modify a solid electrolyte interface (SEI) film during the film formation on the surfaces of the positive electrode and the negative electrode, thereby building more excellent interface protection, and further alleviating side reactions of the electrolyte solution on the surfaces of the positive and negative electrodes.

In addition, when the content of one or more of the other additives in the electrolyte solution falls within an appropriate range, the electrochemical performance of the electrochemical device can be further optimized. In some embodiments, based on the total mass of the electrolyte solution, a mass percent of the unsaturated cyclic carbonate ester is 0.1% to 5%, a mass percent of the fluorinated carbonate ester is 0.1% to 5%, a mass percent of the cyclic sultone is 0.1% to 5%, a mass percent of the cyclic sulfate lactone is 0.1%~5%, and a mass percent of the nitrile compound is 0.1% to 5%.

In some embodiments, the unsaturated cyclic carbonate ester includes at least one of, or is at least one selected from, vinylene carbonate (VC) or vinyl ethylene carbonate (VEC).

In some embodiments, the fluorinated carbonate ester includes fluoroethylene carbonate (FEC).

In some embodiments, the cyclic sultone includes at least one of, or is at least one selected from, 1,3-propane sultone (PS), 1,4-butane sultone (BS), or 1,3-propene sultone (PST).

In some embodiments, the cyclic sulfate lactone includes at least one of, or is at least one selected from, ethylene

sulfate (DTD), propylene sulfate, or 4-methylethylene sulfate.

In some embodiments, the nitrile compound includes at least one of, or is at least one selected from, succinonitrile (SN), glutaronitrile, adiponitrile (ADN), 2-methyleneglutaronitrile, dipropylmalononitrile, 1,3,6-hexanetricarbonitrile (HTCN), 1,2,6-hexanetricarbonitrile, 1,3,5-pentanetricarbonitrile, or 1,2-bis(cyanoethoxy)ethane (EDPN).

The nickel-containing positive active material of this application includes a nickel-containing compound that enables reversible intercalation and deintercalation of lithium ions. Specific types of the positive active material are not limited, and may be selected as required. The positive active material may include lithium, nickel, and at least one type of other active metal. Other active metal elements may include at least one of, or may be at least one selected from, the following elements: zinc (Zn), titanium (Ti), aluminum (Al), tungsten (W), zirconium (Zr), niobium (Nb), yttrium (Y), antimony (Sb), cobalt (Co), manganese (Mn), magnesium (Mg), boron (B), vanadium (V), chromium (Cr), iron (Fe), copper (Cu), molybdenum (Mo), tin (Sn), calcium (Ca), strontium (Sr), or lanthanum (La).

In some embodiments, the positive active material may include, but is not limited to, at least one of lithium nickel oxide, lithium nickel cobalt manganese oxide, or a lithium-rich nickel-based material, or lithium nickel cobalt aluminum oxide. Alternatively, a plurality of the above compounds may be used in combination as the positive active material.

In some embodiments, the positive active material layer further includes a binder. The binder improves bonding between particles of the positive active material and bonding between the positive active material and a current collector. Examples of the binder include, but are not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, and nylon.

In some embodiments, the positive active material layer optionally further includes a conductive material, thereby further improving conductivity of the electrode. The conductive material may be any conductive material as long as the material does not cause a chemical change. Examples of the conductive material include but without limitation: a carbon-based material (for example, natural graphite, artificial graphite, carbon black, acetylene black, Ketjen black, and carbon fiber), a metal-based material (for example, metal powder or metal fiber containing copper, nickel, aluminum, silver, and the like), a conductive polymer (for example, a polyphenylene derivative), and any mixture thereof.

The positive current collector may be a positive current collector commonly used in the art, and, in some embodiments, may include but is not limited to an aluminum foil or a nickel foil.

In some embodiments, the electrochemical device of this application further includes a negative electrode. The negative electrode includes a negative current collector and a negative active material layer disposed on at least one surface of the negative current collector. The negative active material layer includes a negative active material.

The negative active material of this application includes any material that enables reversible intercalation and deintercalation of lithium ions. The specific type of the negative active material is not limited, and may be selected as required. In some embodiments, the negative active material may include or be selected from at least one of the following materials: a carbonaceous material, a siliceous material, an alloy material, and a composite oxide material containing lithium metal. In some embodiments, the carbonaceous material may include but is not limited to crystalline carbon, non-crystalline carbon, and a mixture thereof. The crystalline carbon may be amorphous or flake-shaped, mini-flake-shaped, spherical or fibrous natural graphite or artificial graphite. The non-crystalline carbon may be soft carbon, hard carbon, mesophase pitch carbide, calcined coke, and the like.

In some embodiments, the negative active material may include, but is not limited to, at least one of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, $SnO_2$, spinel-structured lithiated $TiO_2$-$Li_4Ti_5O_{12}$, or a Li-Al alloy.

The negative current collector may be a negative current collector commonly used in the art. In some embodiments, the negative current collector includes but is not limited to a copper foil, a nickel foil, a stainless steel foil, a titanium foil, foamed nickel, foamed copper, a polymer substrate coated with a conductive metal, or any combination thereof.

In some embodiments, the negative active material layer may further include a binder and/or a conductive agent. The binder and the conductive agent may be made from the materials disclosed in the foregoing description of the positive electrode, details of which are omitted here.

In some embodiments, the electrochemical device of this application further includes a separator disposed between the positive electrode and the negative electrode to prevent a short circuit. The material and the shape of the separator used in the electrochemical device are not particularly limited herein, and may be based on any technology disclosed in the prior art. In some embodiments, the separator includes a polymer or an inorganic substance or the like formed of a material that is stable to the electrolyte according to this application.

In some embodiments, the separator may include a substrate layer and a surface treatment layer. The substrate layer is a non-woven fabric, film or composite film, each having a porous structure. The material of the substrate layer includes at least one of: polyethylene, polypropylene, polyethylene terephthalate, and polyimide. Specifically, the material of the substrate layer may be a polypropylene porous film, a polyethylene porous film, a polypropylene non-woven fabric, a

polyethylene non-woven fabric, or a polypropylene-polyethylene-polypropylene porous composite film.

In some embodiments, a surface treatment layer is disposed on at least one surface of the substrate layer. The surface treatment layer may be a polymer layer or an inorganic compound layer, or a layer compounded of a polymer and an inorganic compound.

The inorganic compound layer includes inorganic particles and a binder. The inorganic particles include one or more of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder includes one or more of polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, poly methyl methacrylate, polytetrafluoroethylene, and polyhexafluoropropylene.

The polymer layer includes a polymer, and the material of the polymer includes at least one of: a polyamide, a polyacrylonitrile, an acrylate polymer, a polyacrylic acid, a polyacrylate, a polyvinylpyrrolidone, a polyvinyl ether, a polyvinylidene fluoride, and a poly(vinylidene fluoride-hexafluoropropylene).

A person skilled in the art understands that the electrochemical device according to this application may be a lithium-ion battery or any other appropriate electrochemical device. To the extent not departing from the content disclosed herein, the electrochemical device according the embodiments of this application includes any device in which an electrochemical reaction occurs. Specific examples of the electrochemical device include all kinds of primary batteries, secondary batteries, solar batteries, or capacitors. Especially, the electrochemical device is a lithium secondary battery, including a lithium metal secondary battery, a lithium-ion secondary battery, a lithium polymer secondary battery, or a lithium-ion polymer secondary battery.

The use of the electrochemical device according to this application is not particularly limited, and the electrochemical device may be used for any purposes known in the prior art. According to some embodiments of this application, the electrochemical device of this application is applicable to electronic devices. The electronic devices include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, and the like.

The following describes the technical solutions of this application in more detail with reference to comparative embodiments and specific embodiments, but this application is not limited to such embodiments. A person skilled in the art understands that the preparation method described herein is merely exemplary. Any modification or equivalent replacement made to the technical solutions of this application without departing from the scope of the technical solutions of this application shall fall within the protection scope of this application.

## Embodiments

The following describes methods for preparing lithium-ion batteries and methods for testing performance of the lithium-ion batteries according to the embodiments and comparative embodiments of this application.

(I) Preparing a lithium-ion battery

(1) Preparing a positive electrode

Mixing lithium nickel cobalt manganese oxide $LiNi_xCo_yMn_zO_2$ ($x + y + z = 1$, the positive electrode materials with different Ni contents are obtained by adjusting the feeding rate of the precursor) as a positive active material lithium, a conductive agent Super P, and a binder polyvinylidene difluoride (PVDF) at a mass ratio of 96.1: 1.9: 2, adding N-methylpyrrolidone (NMP), and stirring well with a vacuum mixer to obtain a positive electrode slurry in which the solid content is 72 wt%. Applying the positive electrode slurry evenly onto aluminum foils by different coating weights, where the thickness of each aluminum foil is 10 μm. Drying the aluminum foils at 85 °C, and then performing cold-pressing, cutting, and slitting, and drying the foils in an 85 °C vacuum environment for 4 hours to obtain positive electrodes coated with the positive active material by different coating weights.

(2) Preparing a negative electrode

Mixing artificial graphite as a negative active material, Super P as a conductive agent, sodium carboxymethyl cellulose (CMC) as a thickener, and styrene-butadiene rubber (SBR) as a binder at a mass ratio of 96.4: 1.5: 0.5: 1.6. Adding deionized water, and mixing well with a vacuum mixer to obtain a negative slurry in which the solid content is 54

wt%. Applying the negative electrode slurry evenly onto a negative current collector copper foil. Drying the copper foil at 85 °C, and then performing cold-pressing, cutting, and slitting, and drying the foil in a 120 °C vacuum environment for 12 hours to obtain a negative electrode.

(3) Preparing an electrolyte solution

Mixing ethyl methyl carbonate (EMC) and diethyl carbonate (DEC) well at a mass ratio of 1: 2 in a dry argon atmosphere glovebox, and then dissolving a well-dried lithium salt $LiPF_6$ and/or LiFSI in the above nonaqueous solvent to obtain a base electrolyte solution in which the concentration of the lithium salt is 1 mol/L. Subsequently, adding a specified amount of ethylene carbonate (EC), propylene carbonate (PC), and fluorine-substituted linear carboxylate ester and/or other additives into the base electrolyte solution at the mass percentages specified in the embodiments and comparative embodiments set out below, so as to obtain an electrolyte solution.

The abbreviations and full names of constituents in the electrolyte solution are shown in the following table:

| Material name | Abbreviation | Material name | Abbreviation |
|---|---|---|---|
| Ethylene carbonate | EC | Vinylene carbonate | VC |
| Diethyl carbonate | DEC | Fluoroethylene carbonate | FEC |
| Succinonitrile | SN | Adiponitrile | ADN |
| 1,3-propane sultone | PS | 1,3,6-hexanetricarbonitrile | HTCN |
| Ethylene sulfate | DTD | | |

(4) Preparing a separator

Using a 16 μm-thick polyethylene (PE) film as a separator.

(5) Preparing a lithium-ion battery

Stacking the positive electrode, the separator, and the negative electrode sequentially, placing the separator between the positive electrode and the negative electrode to serve a function of separation, and winding the stacked materials to obtain a bare cell. Welding tabs, putting the bare cell into an outer package foil made of an aluminum laminated film, injecting the above-prepared electrolyte solution into the dried bare cell, and performing steps such as vacuum sealing, standing, chemical formation (charging the battery at a constant current of 0.02C until a voltage of 3.3 V, and then charging the battery at a constant current of 0.1C until a voltage of 3.6 V), shaping, and capacity test to obtain a pouch-type lithium-ion battery (4 mm thick, 72 mm wide, and 100 mm long).

(II) Methods for testing the positive active material and the lithium-ion battery

(1) Testing high-temperature cycle performance and the gas-induced expansion rate

Putting the lithium-ion battery into a 45 °C thermostat, and leaving the battery to stand for 30 minutes so that the temperature of the lithium-ion battery is constant. Charging the constant-temperature lithium-ion battery at a constant current of 2C until the voltage reaches 4.2 V, and then charging the battery at a constant voltage of 4.2 V until the current drops to 0.05C. Subsequently, discharging the battery at a constant current of 10C until the voltage reaches 2.8 V, thereby completing one charge-discharge cycle. Repeating the above charge-discharge process for 600 cycles, and recording a first-cycle discharge capacity $C_1$ and a $600^{th}$-cycle discharge capacity $C_{600}$ of the lithium-ion battery. At the same time, recording the thickness $T_1$ of the lithium-ion battery before the start of the cycling and the thickness $T_{600}$ of the lithium-ion battery after the battery is charged and discharged for 600 cycles.

Using the first-cycle discharge capacity $C_1$ as a reference, calculating the $600^{th}$-cycle capacity retention rate of the lithium-ion battery as: capacity retention rate = $(C_{600}/C_1) \times 100\%$. Using the capacity retention rate as an indicator for evaluating the high-temperature cycle performance of the lithium-ion battery.

Using the thickness $T_1$ of the lithium-ion battery before cycling as a reference, calculating the $600^{th}$-cycle thickness expansion rate of the lithium-ion battery as: thickness expansion rate = $(T_{600} - T_1)/T_1 \times 100\%$. Using the thickness expansion rate as an indicator for evaluating the gas-induced swelling degree of the lithium-ion battery.

(2) Measuring the direct-current resistance (DCR)

Putting the lithium-ion battery into a 25 °C thermostat, and leaving the battery to stand for 30 minutes so that the temperature of the lithium-ion battery is constant. Charging the battery at a constant current of 2C until the voltage reaches 4.2 V, and then charging the battery at a constant voltage until the current drops to 0.025 C, leaving the battery to stand for 5 minutes, and then discharging the battery at a constant current of 0.2C until the voltage reaches 2.8 V. Recording this discharge capacity as an actual capacity $C_{actual}$.

Leaving the battery to stand for 5 minutes, and then charging the battery at a constant current of $2C_{actual}$ until the voltage reaches 4.2 V, and then charging the battery at a constant voltage until the current drops to $0.02C_{actual}$.

Leaving the battery to stand for 120 minutes, and then discharging the battery at a constant current of $0.1C_{actual}$ for 60 minutes, and recording the voltage value at this time as $V_1$. Discharging the battery at a constant current of $1C_{actual}$ for 1 second, and recording the voltage value at this time as $V_2$, during which the voltage is sampled at intervals of 100 ms.

Calculating the impedance in a 50% state of charge (SOC) as: impedance = $(V_1-V_2)/(1C_{actual} - 0.1C_{actual})$.

(3) Determining the nickel content in the positive active material by inductively coupled plasma (ICP) optical emission spectrometry

Peeling off the positive active material layer from the positive current collector, and determining the content of nickel by performing an ICP test on the positive active material layer in the following process.

Specimen pretreatment: Weighing out an appropriate amount of specimen, and putting the specimen into a numbered digestion vessel. Recording the mass of the specimen after the readout of the balance stabilizes, accurate to 0.0001 g. Adding a digestion agent into the digestion vessel slowly and allowing the specimen on the inner wall of the vessel to be washed down to the bottom of the vessel. Shaking the digestion vessel gently, wiping the digestion vessel clean, and then placing the digestion vessel into a microwave digestion instrument to start digesting. Using the resulting digestion solution as a specimen to be tested.

Test process: Startup and preheating → establishing a method → ignition → testing → shutdown → data processing

Test: Using a single standard solution of Mn with a concentration of 1 mg/L to align the plasma torch in the ICP instrument. Cleaning the specimen feeding system, and then plotting a calibration curve by using a prepared standard specimen. Testing a control specimen to verify the accuracy of the curve. Entering the specimen information (name, specimen mass, predetermined volume, dilution factor), and testing the specimen.

(III) Embodiments and comparative embodiments

Preparing the lithium-ion batteries of Embodiments 1 to 11 and Comparative Embodiments 1 to 3 based on the above preparation method, where the content of nickel in the positive active material layer, the coating weight, the content of the fluorine-substituted linear carboxylate ester in the electrolyte solution, and the electrochemical test results of the lithium-ion battery are shown in Table 1. The fluorine-substituted linear carboxylate ester used in Table 1 is the compound represented by Formula I-1.

**Table 1**

| Embodiment | Variable | | | | 45 °C cycle | | DCR (mΩ) |
|---|---|---|---|---|---|---|---|
| | Ni content x (%) | Coating weight w ($mg/cm^2$) | Content of fluorocarboxylate ester a (%) | a/w | capacity retention rate | Thickness expansion rate | |
| Comparative Embodiment 1 | 30 | 20 | 0 | 0 | 38.9% | 44.4% | 49.3 |
| Comparative Embodiment 2 | 30 | 20 | 5 | 0.25 | 45.2% | 38.8% | 48.3 |
| Comparative Embodiment 3 | 33 | 7.6 | 65 | 8.5 | 75.3% | 220% | 24.8 |
| Embodiment 1 | 33 | 8.6 | 30 | 3.5 | 76.5% | 21.5% | 22.6 |
| Embodiment 2 | 40 | 8.6 | 30 | 3.5 | 82.5% | 16.9% | 21.9 |
| Embodiment 3 | 50 | 8.6 | 30 | 3.5 | 83.4% | 15.7% | 21.2 |

(continued)

| Embodiment | Variable | | | | 45 °C cycle | | DCR (mΩ) |
|---|---|---|---|---|---|---|---|
| | Ni content x (%) | Coating weight w ($mg/cm^2$) | Content of fluorocarboxylate ester a (%) | a/w | capacity retention rate | Thickness expansion rate | |
| Embodiment 4 | 40 | 6.6 | 30 | 4.6 | 81.5% | 17.0% | 19.1 |
| Embodiment 5 | 40 | 9.8 | 30 | 3.1 | 82.3% | 16.8% | 22.1 |
| Embodiment 6 | 40 | 13.3 | 30 | 2.3 | 81.6% | 17.6% | 23.6 |
| Embodiment 7 | 40 | 18.7 | 30 | 1.6 | 80.2% | 18.1% | 24.6 |
| Embodiment 8 | 40 | 8.6 | 15 | 1.7 | 79.9% | 19.9% | 22.8 |
| Embodiment 9 | 40 | 8.6 | 35 | 4.1 | 83.6% | 15.4% | 21.1 |
| Embodiment 10 | 40 | 8.6 | 50 | 5.8 | 84.8% | 15.3% | 20.3 |
| Embodiment 11 | 40 | 8.6 | 70 | 8.1 | 85.2% | 15.0% | 19.6 |

As can be seen from the data in Table 1, in contrast to Comparative Embodiment 1, after the fluorine-substituted linear carboxylate ester is added in Comparative Embodiment 2 and Embodiments 1 to 11, the cycle stability of the electrochemical device at high temperature is improved, and both the gas production degree and the direct-current resistance (DCR) are reduced.

In addition, in contrast to Comparative Embodiments 2 and 3, when the ratio of the mass percent a% of the fluorine-substituted linear carboxylate ester to the coating weight w of the positive active material is further adjusted to fall within the range of $1.0 \leq a/w \leq 8.2$, the high-temperature cycle performance, gas production degree, and impedance characteristics of the electrochemical devices in Embodiments 1 to 11 are improved.

**Table 2**

| Embodiment | Fluorocarboxylate ester | | | 45 °C cycle | | DCR (mΩ) |
|---|---|---|---|---|---|---|
| | Content of Formula 1-1 $a_1$% | Content of Formula 1-2 $a_2$% | $(a_1+a_2)$% | Capacity retention rate | Thickness expansion rate | |
| Embodiment 2 | 30 | 0 | 30 | 82.5% | 16.9% | 21.9 |
| Embodiment 12 | 10 | 20 | 30 | 80.3% | 17.2% | 22.2 |
| Embodiment 13 | 15 | 15 | 30 | 80.9% | 17.1% | 22.1 |
| Embodiment 14 | 20 | 10 | 30 | 81.5% | 17.0% | 22.0 |
| Embodiment 15 | 30 | 10 | 40 | 83.5% | 16.2% | 20.9 |
| Embodiment 16 | 30 | 20 | 50 | 83.9% | 16.0% | 20.6 |
| Embodiment 17 | 40 | 20 | 60 | 84.9% | 15.2% | 20.1 |
| Embodiment 18 | 50 | 20 | 70 | 85.6% | 15.0% | 19.5 |
| Comparative Embodiment 4 | 40 | 40 | 80 | 75.1% | 22.3% | 24.5 |

As can be seen from Table 2 above, when the content of the fluorocarboxylate ester in the electrolyte solution is 30%, in contrast to Embodiments 12 to 14 in which both the compound of Formula I-1 and the compound of Formula I-2 are added, the high-temperature performance and impedance characteristics of the electrochemical devices are more excellent in Embodiment 2 in which the compound of Formula I-1 alone is added. In addition, when both the compound of Formula I-1 and the compound of Formula I-2 are added in the electrolyte solution, with the increase of the content of the fluorocarboxylate ester, the high-temperature performance and impedance characteristics of the resulting electrochemical device can be further optimized (referring to Embodiments 15 to 18). However, when the content of the fluorocarboxylate ester reaches 80% excessively, the electrochemical performance of the electrochemical device deteriorates

instead (referring to Comparative Embodiment 4).

**Table 3**

| Embodiment | Variable | | | 45 °C cycle | | DCR (mΩ) |
|---|---|---|---|---|---|---|
| | Content c of LiFSI (mol/L) | Coating weight w (mg/cm$^2$) | c/w | Capacity retention rate | Thickness expansion rate | |
| Embodiment 2 | 0 | 8.6 | 0 | 82.5% | 16.9% | 21.9 |
| Embodiment 19 | 0.3 | 8.6 | 0.04 | 83.5% | 16.4% | 21.5 |
| Embodiment 20 | 0.6 | 8.6 | 0.08 | 84.2% | 16.0% | 20.8 |
| Embodiment 21 | 0.9 | 8.6 | 0.12 | 84.9% | 15.6% | 20 |
| Embodiment 22 | 1.2 | 8.6 | 0.16 | 85.3% | 15.3% | 19.2 |
| Embodiment 23 | 0.6 | 6.6 | 0.09 | 82.9% | 16.5% | 18.6 |
| Embodiment 24 | 0.6 | 9.8 | 0.06 | 83.8% | 16.3% | 21.5 |
| Embodiment 25 | 0.6 | 13.3 | 0.05 | 83.1% | 16.5% | 22.9 |
| Embodiment 26 | 1.2 | 6.3 | 0.19 | 78.1% | 17.8% | 18.9 |

Referring to Embodiment 2 and Embodiments 19 to 22 in Table 3 above, on condition that the coating weight remains constant, with the continuous increase of the content of LiFSI in the electrolyte solution, the DCR of the resulting electrochemical device gradually decreases. At the same time, the cycle performance and gas production degree of the electrochemical device at high temperature are improved.

In Embodiment 26 versus Embodiment 22, when the c/w ratio value of the electrochemical device falls within $0.04 \leq c/w \leq 0.18$, the high-temperature performance of the electrochemical device is further optimized, and the gas production degree is suppressed. In addition, referring to Embodiments 23 to 25, when the concentration of the LiFSI denoted as c mol/L and the coating weight of the positive active material denoted as w mg/cm$^2$ satisfy $0.04 \leq c/w \leq 0.18$, the high-temperature performance and impedance characteristics of the electrochemical devices are excellent.

**Table 4**

| Embodiment | Changed | | | 45 °C cycle | | DCR (mΩ) |
|---|---|---|---|---|---|---|
| | EC content $b_1$ (%) | Ni content x (%) | $b_1/x$ | Capacity retention rate | Thickness expansion rate | |
| Embodiment 2 | 3.5 | 40 | 0.08 | 82.5% | 16.9% | 21.9 |
| Embodiment 27 | 20 | 40 | 0.5 | 82.9% | 16.5% | 21.5 |
| Embodiment 28 | 30 | 40 | 0.75 | 84.3% | 16.1% | 21.3 |
| Embodiment 29 | 15 | 33 | 0.45 | 80.1% | 17.3% | 22.2 |
| Embodiment 30 | 15 | 45 | 0.33 | 82.0% | 17.0% | 22.0 |
| Embodiment 31 | 15 | 55 | 0.27 | 83.0% | 16.5% | 21.1 |
| Embodiment 32 | 33.3 | 33 | 1.01 | 78.3% | 18.1% | 23.5 |

As can be seen from Embodiment 2 versus Embodiments 27 and 28, on the premise of keeping the nickel content constant, the gradual increase in the content of the EC in the electrolyte solution can further optimize the high-temperature cycle performance of the electrochemical device and reduce the gas production degree and the DCR. In addition, As can be seen from Table 4, when the mass percent $b_1$% of the EC and the mass percent x% of nickel satisfy $0.1 \leq b_1/x \leq 1.0$, the electrochemical device exhibits more excellent electrochemical performance.

**Table 5**

| Embodiment | Changed | | | 45 °C cycle | | DCR (mΩ) |
|---|---|---|---|---|---|---|
| | PC content $b_2$ (%) | Coating weight w ($mg/cm^2$) | $b_2/w$ | Capacity retention rate | Thickness expansion rate | |
| Embodiment 2 | 36 | 6.6 | 5.5 | 82.5% | 16.9% | 21.9 |
| Embodiment 33 | 5 | 8.6 | 0.6 | 82.7% | 16.2% | 21.0 |
| Embodiment 34 | 30 | 8.6 | 3.5 | 84.3% | 16.1% | 20.8 |
| Embodiment 35 | 20 | 6.6 | 3.0 | 82.9% | 16.3% | 20.3 |
| Embodiment 36 | 20 | 9.8 | 2.0 | 83.6% | 16.0% | 21.7 |
| Embodiment 37 | 20 | 13.3 | 1.5 | 83.1% | 16.2% | 21.6 |

As can be seen from the data in Table 5, when the electrochemical device further satisfies $0.3 \leq b_2/w \leq 5.4$, the high-temperature cycle performance of the electrochemical device is further improved, the gas production is suppressed, and the DCR is reduced to some extent.

**Table 6**

| Embodiment | Variable | 45 °C cycle | | DCR (mΩ) |
|---|---|---|---|---|
| | Other additives | Capacity retention rate | Thickness expansion rate | |
| Embodiment 20 | / | 84.2% | 16.0% | 20.8 |
| Embodiment 38 | 0.5% VC + 2% FEC | 85.0% | 15.2% | 21.3 |
| Embodiment 39 | 0.5% VC + 1.5% PS + 1% DTD | 85.4% | 15.0% | 21.1 |
| Embodiment 40 | 0.5% VC + 1.0% PS + 2% HTCN | 84.8% | 14.8% | 21.2 |
| Embodiment 41 | 2% FEC + 1% DTD + 2% HTCN | 84.6% | 15.1% | 21.0 |

As can be seen from the data in Table 6, when other additives (for example, VC, DTD, PS, FEC, and HTCN) are further added on the basis of Embodiment 20, the cycle stability of the electrochemical device at high temperature can be further improved, and the gas production can be further suppressed. However, due to the addition of a variety of additives and the increase in the content of such additives, the DCR of the electrochemical device increases slightly to a degree that falls within a readily acceptable range in practical applications.

References to "embodiments", "some embodiments", "an embodiment", "another example", "example", "specific example" or "some examples" throughout the specification mean that specified features, structures, materials, or characteristics described in such embodiment(s) or example(s) are included in at least one embodiment or example in this application. Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. An electrochemical device, comprising a positive electrode, a negative electrode, and an electrolyte solution, wherein

   the electrolyte solution comprises a fluorine-substituted linear carboxylate ester, and, based on a total mass of the electrolyte solution, a mass percent of the fluorine-substituted linear carboxylate ester is a%, satisfying: $10 \leq a \leq 70$;
   the positive electrode comprises a positive current collector and a positive active material layer applied onto at

least one surface of the positive current collector, the positive active material layer comprises a nickel-containing positive active material, and, based on a total mass of the positive active material layer, a mass percent of nickel is x%, satisfying: $33 \le x \le 55$; and
a coating weight of the positive active material applied on the positive current collector is w ($mg/cm^2$), satisfying: $6.5 \le w \le 19.5$, and $1.0 \le a/w \le 8.2$.

2. The electrochemical device according to claim 1, wherein the fluorine-substituted linear carboxylate ester comprises at least one of compounds represented by the following Formula I:

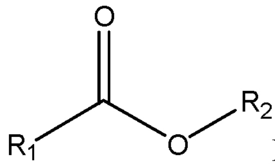 Formula I;

and
in Formula I, $R_1$ and $R_2$ each independently are an unsubstituted or fluorine-substituted $C_1$ to $C_3$ alkyl, and at least one of $R_1$ or $R_2$ is a fluorine-substituted $C_1$ to $C_3$ alkyl.

3. The electrochemical device according to claim 2, wherein the fluorine-substituted linear carboxylate ester comprises at least one of compounds represented by the following formulas:

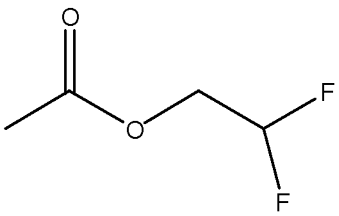 Formula I-1, 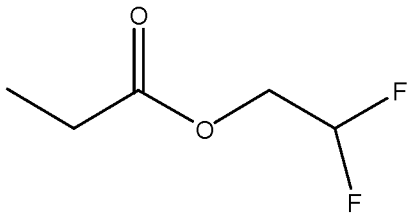 Formula I-2,

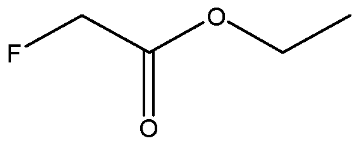 Formula I-3, 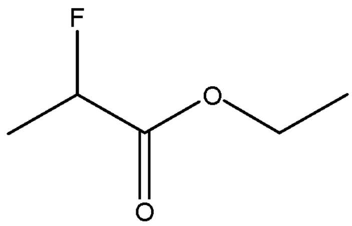 Formula I-4,

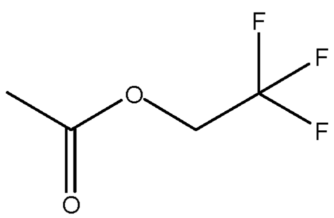 Formula I-5, or 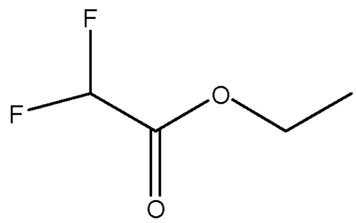 Formula I-6.

4. The electrochemical device according to claim 3, wherein the electrolyte solution comprises a compound of Formula I-1 and a compound of Formula I-2, and, based on the total mass of the electrolyte solution, a mass percent of the compound of Formula I-1 is $a_1$%, and a mass percent of the compound of Formula I-2 is $a_2$%, satisfying: $10 \le a_1 + a_2 \le 70$.

5. The electrochemical device according to claim 1, wherein the electrolyte solution further comprises lithium bis(fluorosulfonyl)imide (LiFSI) as a lithium salt.

6. The electrochemical device according to claim 5, wherein a concentration of the LiFSI is c mol/L, satisfying: $0.3 \le c \le$

1.2.

7. The electrochemical device according to claim 5, wherein a concentration of the LiFSI denoted as c mol/L and a coating weight of the positive active material denoted as w mg/cm$^2$ satisfy: $0.04 \leq c/w \leq 0.18$.

8. The electrochemical device according to claim 1, wherein the electrolyte solution further comprises a non-fluorinated cyclic carbonate ester, and the non-fluorinated cyclic carbonate ester comprises at least one of ethylene carbonate (EC) or propylene carbonate (PC).

9. The electrochemical device according to claim 8, wherein, based on the total mass of the electrolyte solution, a mass percent of the EC is $b_1$%, and a mass percent of the PC is $b_2$%, satisfying: $5 \leq b_1 + b_2 \leq 40$, and $0.2 \leq b_1/b_2 \leq 5$.

10. The electrochemical device according to claim 8, wherein a mass percent $b_1$% of the EC and a mass percent x% of nickel satisfy $0.1 \leq b_1/x \leq 1.0$.

11. The electrochemical device according to claim 8, wherein a mass percent of the PC denoted as $b_2$% and a coating weight of the positive active material denoted as w mg/cm$^2$ satisfy:

$$0.3 \leq b_2/w \leq 5.4$$

12. The electrochemical device according to claim 1, wherein the electrolyte solution further comprises at least one of an unsaturated cyclic carbonate ester, a fluorinated carbonate ester, a cyclic sultone, a cyclic sulfate lactone, or a nitrile compound; and
based on the total mass of the electrolyte solution, a mass percent of the unsaturated cyclic carbonate ester is 0.1% to 5%, a mass percent of the fluorinated carbonate ester is 0.1% to 5%, a mass percent of the cyclic sultone is 0.1% to 5%, a mass percent of the cyclic sulfate lactone is 0. 1%~5%, and a mass percent of the nitrile compound is 0.1% to 5%.

13. The electrochemical device according to claim 12, wherein the unsaturated cyclic carbonate ester comprises at least one of vinylene carbonate (VC) or vinyl ethylene carbonate (VEC), and the fluorinated carbonate ester comprises fluoroethylene carbonate (FEC);

the cyclic sultone comprises at least one of 1,3-propane sultone (PS), 1,4-butane sultone (BS), or 1,3-propene sultone (PST);
the cyclic sulfate lactone comprises at least one of ethylene sulfate (DTD), propylene sulfate, or 4-methylethylene sulfate; and
the nitrile compound comprises at least one of succinonitrile (SN), glutaronitrile, adiponitrile (ADN), 2-methyleneglutaronitrile, dipropylmalononitrile, 1,3,6-hexanetricarbonitrile (HTCN), 1,2,6-hexanetricarbonitrile, 1,3,5-pentanetricarbonitrile, or 1,2-bis(cyanoethoxy)ethane (EDPN).

14. The electrochemical device according to any one of claims 1 to 13, wherein the electrochemical device further satisfies at least one of the following conditions:

(1)

$$40 \leq a_1 + a_2 \leq 70;$$

(2)

$$0.5 \leq c \leq 1.2;$$

(3)

$$0.05 \leq c/w \leq 0.16;$$

(4)

$$10 \leq b_1 + b_2 \leq 40 \text{ and } 0.5 \leq b_1/b_2 \leq 5;$$

(5)

$$0.2 \leq b_1/x \leq 0.8;$$

or
(6)

$$0.5 \leq b_2/w \leq 5.0$$

**15.** An electronic device, wherein the electronic device comprises the electrochemical device according to any one of claims 1 to 14.

## INTERNATIONAL SEARCH REPORT

International application No.
**PCT/CN2022/073179**

**A. CLASSIFICATION OF SUBJECT MATTER**

H01M 4/13(2010.01)i；H01M 4/525(2010.01)i；H01M 10/0567(2010.01)i；H01M 10/0569(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 正极, 阴极, 镍, 含量, 涂覆, 重量, 质量, battery, positive electrode, cathode, nickel, content, coat, weight, mass

**C. DOCUMENTS CONSIDERED TO BE RELEVANT**

| Category* | Citation of document, with indication, where appropriate, of the relevant passages | Relevant to claim No. |
|---|---|---|
| Y | US 2016164057 A1 (E. I. DU PONT DE NEMOURS AND CO.) 09 June 2016 (2016-06-09) description, paragraphs 66-195 | 1-15 |
| Y | CN 104466094 A (TOSHIBA CORP.) 25 March 2015 (2015-03-25) description, paragraphs 15-99 | 1-15 |
| Y | CN 113130995 A (SHENZHEN CAPCHEM TECHNOLOGY CO., LTD.) 16 July 2021 (2021-07-16) description, paragraphs 39-87 | 1-15 |
| A | CN 112531157 A (SOUNDON NEW ENERGY TECHNOLOGY CO., LTD.) 19 March 2021 (2021-03-19) entire document | 1-15 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/073179**

| Patent document cited in search report | Publication date (day/month/year) | Patent family member(s) | Publication date (day/month/year) |
|---|---|---|---|
| US 2016164057 A1 | 09 June 2016 | None | |
| CN 104466094 A | 25 March 2015 | EP 2851980 A1 | 25 March 2015 |
| | | JP 2015084322 A | 30 April 2015 |
| | | EP 3404751 A1 | 21 November 2018 |
| | | US 2015079469 A1 | 19 March 2015 |
| | | CN 104466094 B | 12 April 2017 |
| | | EP 2851980 B1 | 22 August 2018 |
| | | JP 6456630 B2 | 23 January 2019 |
| | | JP 2019040890 A | 14 March 2019 |
| | | US 10374220 B2 | 06 August 2019 |
| | | JP 6661743 B2 | 11 March 2020 |
| | | EP 3404751 B1 | 07 April 2021 |
| CN 113130995 A | 16 July 2021 | WO 2021135920 A1 | 08 July 2021 |
| CN 112531157 A | 19 March 2021 | None | |

Form PCT/ISA/210 (patent family annex) (January 2015)